# EUROPEAN PATENT SPECIFICATION

(11) **EP 1 773 610 B1**
(45) Date of publication and mention of the grant of the patent: **16.09.2009**
(21) Application number: 05766114.2
(22) Date of filing: 08.07.2005
(51) Int. Cl.: B60H 1/26

(54) **A VENTILATING DEVICE FOR MOTOR VEHICLES**
BELÜFTUNGSVORRICHTUNG FÜR KRAFTFAHRZEUGE
DISPOSITIF DE VENTILATION POUR VEHICULES AUTOMOBILES

(30) Priority: 13.07.2004 IT BO20040436
(43) Date of publication of application: 18.04.2007
(73) Proprietor: SPAL Automotive S.r.l., 42015 Correggio (Reggio Emilia) (IT)
(72) Inventor: SPAGGIARI, Alessandro, I-42015 Correggio (Reggio Emilia) (IT)
(74) Representative: Lanzoni, Luciano
(86) International application number: PCT/IB2005/002216
(87) International publication number: WO 2006/008648

(56) References cited:
- US-A- 3 210 956
- US-B1- 6 361 428

## Description

### Technical Field

This invention relates to a motor vehicle comprising a motor vehicle ventilating device, suitable in particular, for installation in automobiles and the like, that is to say, in vehicles with cabins of relatively limited height.

### Background Art

Automotive climate control systems have undergone considerable technological development in recent years.

In this specification, the term "climate control system" is used to mean any system comprising an air heating device and an air cooling device and which may include a unit for controlling and adjusting the two devices in such a way as to create optimum temperature conditions in the vehicle cabin.

Early climate control systems, although effective in terms of air cooling or heating capacity, were not entirely satisfactory because the heated or cooled air was not uniformly circulated within the vehicle cabin. In particular, the ventilation outlets were located only on or near the dashboard which usually meant that the heated or cooled air coming out of them could not always effectively reach the back of the cabin.

To improve air circulation, auxiliary ventilation outlets were provided at the back of the cabin at floor level but without obtaining satisfactory results.

Ventilating devices designed to be fitted to the cabin roof were also proposed.

A vehicle cabin ventilator of this type is described, for example, in United States patent 3,486,436.

This ventilator comprises a housing designed to be fitted to the cabin roof, near the windscreen, and containing a centrifugal fan equipped with a suitable filter. The housing has a plurality of outlets, arranged in line, for delivering to the vehicle cabin the air that is drawn into the housing by the centrifugal fan.

A ventilating device of the type described in US patent 3,486,436 has a complex structure, however, and involves relatively labour-intensive procedures not only to assemble its components but also to install it in the vehicle cabin roof.

Further, ventilating devices of the type described in US patent 3,486,436, although capable of effectively circulating the air inside the vehicle, are suitable for installation in large cabins such as those of trucks and the like but, on account of their bulky structure, particularly in the vertical direction, cannot be installed in automobiles, which have relatively small cabins. Moreover, the large size of the devices also means that they can be installed only near the windscreen, which in turn means that the back of the cabin remains poorly ventilated.

An evaporating unit for vehicle air conditioning system, like the one disclosed and shown within the document US 3,210,956, refers to a device comprising a housing, fastening means for attaching the housing to the roof of the cabin of a motor vehicle and a fan positioned in the housing. The housing defines a closed chamber equipped with an air inlet opening and at least one air outlet opening for delivering to the vehicle cabin through the outlet opening the air that is drawn into the housing by the fan through the inlet opening. The housing is defined by two half-shells joined to each other in a airtight manner, the first half-shell being designed to be attached to the cabin roof and the second half-shell having the air inlet and outlet openings made in it. The fan being an axial fan.

It is also know from the document US 6, 361, 428 B1 a vehicle ventilation system for sucking air from the motor vehicle cabin and blowing it outside the motor vehicle cabin trough a respective duct.

### Disclosure of the Invention

One aim of the present invention is to provide a motor vehicle comprising a motor vehicle ventilating device with an easy-to-assemble structure permitting low production costs and quick, easy installation in the motor vehicle cabin.

Another aim of the invention is to provide a motor vehicle comprising a motor vehicle ventilating device which, on the one hand, guarantees effective air distribution inside the vehicle while at the same time having a simple, compact structure allowing it to be installed in small vehicles such as automobiles and the like.

Yet another aim of the invention is to provide a motor vehicle comprising a motor vehicle ventilating device that is compact especially in the vertical direction so that it can be installed anywhere along the top of the cabin, even in automobiles and the like.

In accordance with the aims listed above, the invention provides a motor vehicle comprising a motor vehicle ventilating device as defined in claim 1.

The claims dependent on claim 1 refer to preferred, advantageous embodiments of the invention.

### Description of the Drawings

The advantages of the invention will become more apparent from the detailed description which follows, with reference to the accompanying drawings which illustrate a preferred, non-restricting embodiment of the invention and in which:
Figure 1 is a plan view of a preferred embodiment of the motor vehicle ventilating device according to the invention;
Figure 2 is a side view of the device of Figure 1;
Figure 3 is a cross-section through line III-III in Figure 1;
Figure 4 is a perspective view of the device of Figure 1;
Figure 5 is a perspective view of a component of the device of Figure 1;
Figure 6 is another perspective view of the device of Figure 1;
Figure 7a schematically illustrates the device of Figure 1 installed in an automobile cabin;

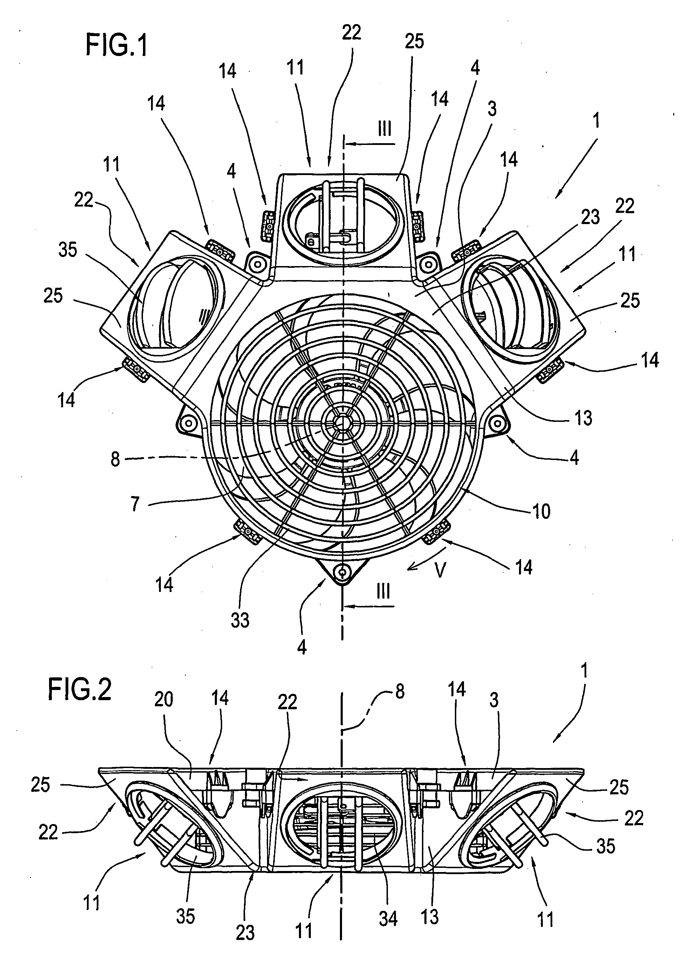

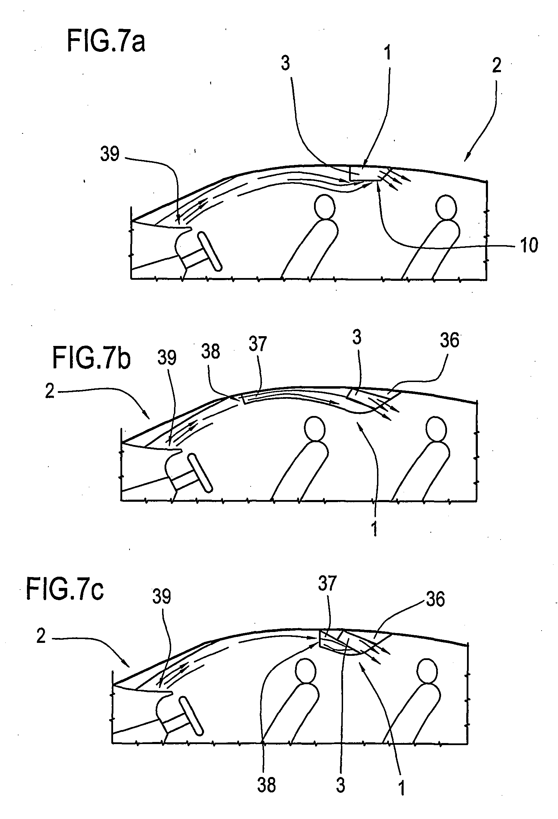

Figures 7a and 7b schematically illustrate two variants of the device of Figure 1 in respective installation configurations in an automobile cabin;

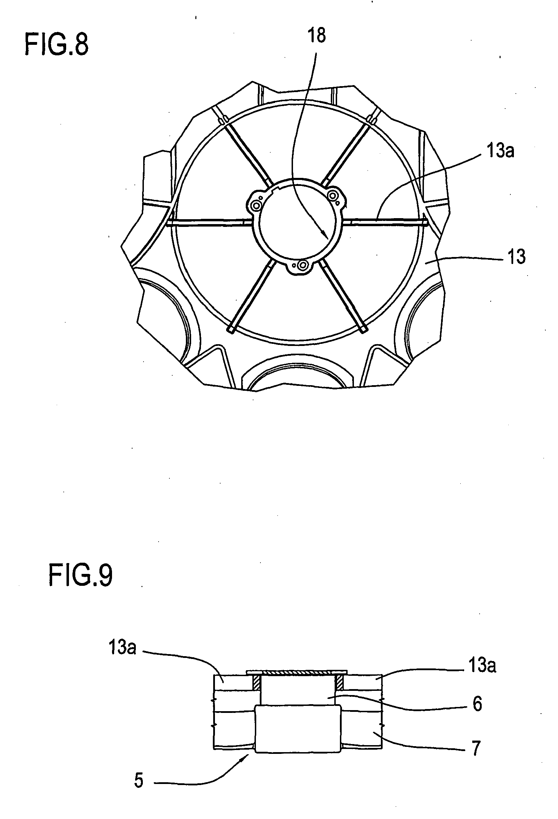

Figures 8 and 9 show details of a first variant of the device according to the invention;

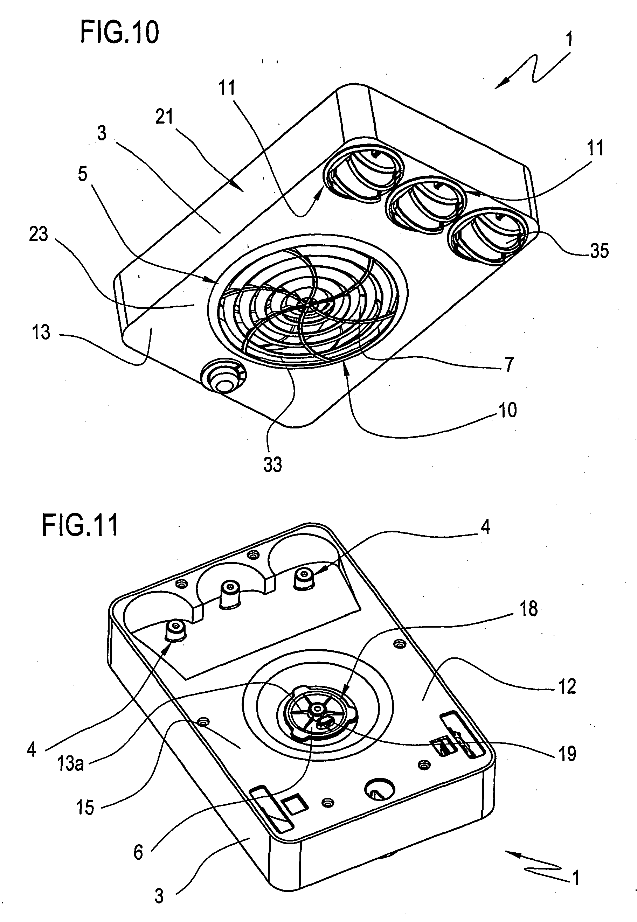

Figures 10 to 13 illustrate a second and a third variant of the device of Figure 1.

### Detailed Description of the Preferred Embodiments of the Invention

With reference to the accompanying drawings, the numeral 1 denotes a motor vehicle ventilating device whose compact size makes it particularly suitable for installation in automobiles 2 and the like (Figures 7a-7c), that is to say, in vehicles having relatively small cabins.

The device 1 comprises a housing 3, or outer shell, having a plurality of annular fastening protrusions 4 enabling it to be easily attached to the roof of a vehicle 2 cabin (Figure 7a). More specifically, the protrusions 4 are designed to be attached to the cabin roof by means of screws or similar fastening elements which are not illustrated.

The housing 3 contains an axial fan 5 comprising a motor 6 and an impeller 7 rotationally driven by the motor 6 about a central axis 8.

The housing 3 defines a closed chamber 9 equipped with a circular air inlet opening 10 and, in the embodiment illustrated, three circular air outlet openings 11 for delivering to the vehicle cabin through the outlet opening or openings (11) the air that is drawn into the housing (3) by the fan (5) through the inlet opening (10).

The fan 5 creates an air flow and a high pressure zone downstream of it against the sides of the housing 3 of the device 1. The air escapes from the high pressure zone through the outlet openings 11. The latter are, preferably, positioned at the sides of the impeller 7 in respective radial directions of the impeller 7 itself. Alternatively, as in the embodiments illustrated in Figures 10, 11 and 12, 13, the outlet openings 11 are positioned at the side of the impeller 7 in skew directions, that is to say, at an angle to the impeller 7, or in the same plane as the impeller 7 and in directions parallel to but offset from the impeller itself.

In other embodiments that are not illustrated, the inlet opening 10 may be substituted by two or more inlet openings that are equivalent in terms of total air passage area.

Similarly, the three outlet openings 11 may be substituted by one or more outlet openings that are equivalent in terms of total air passage area. Further, both the inlet opening 10 and the outlet openings 11 may be other than circular in shape.

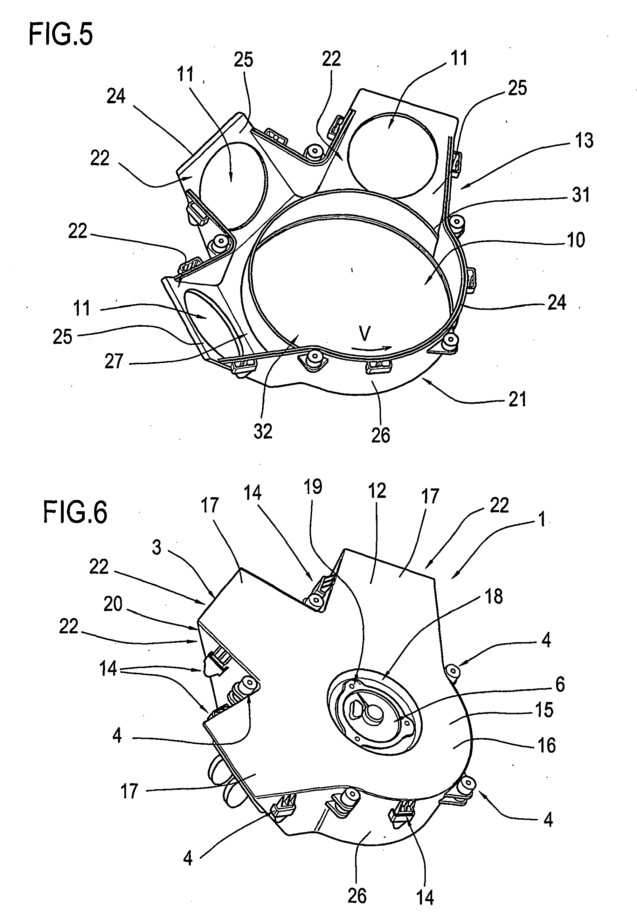

The housing is defined by two half-shells 12, 13 joined to each other in airtight manner and separable, the first half-shell 12, better illustrated in Figure 6, being designed to be attached to the cabin roof, and the second half-shell 13, better illustrated in Figure 5, having four circular openings defining the above mentioned air inlet and outlet openings 10, 11.

The airtight connection between the half-shells 12 and 13 is provided by customary seals, which are not illustrated, and by a plurality of press-in locking elements 14. The annular protrusions 4, defined by an annular portion of the half-shell 12 and an annular portion of the half-shell 13 also act, secondarily, as elements for locking the half-shells 12 and 13 to each other; in the embodiment shown in Figures 10 and 11, they are defined by annular portions of the half-shell 12 only. In any case, the protrusions 4 are positioned and adapted to attach the housing 3 directly to the cabin roof in a predetermined position such that the air inlet opening 10 lies in a substantially horizontal plane (Figure 7a).

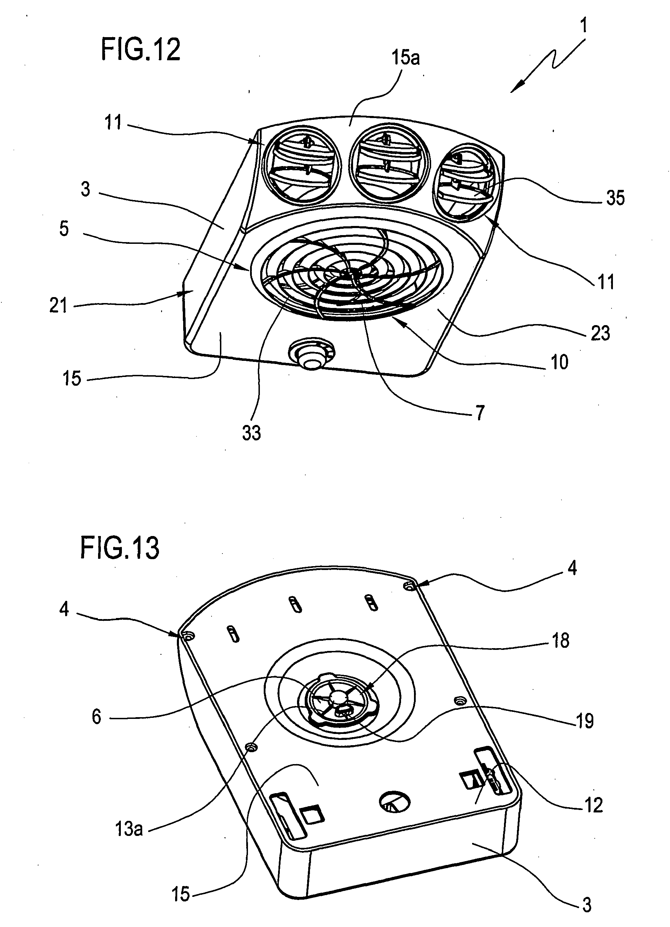

The half-shell 12 has, preferably, a flat bottom wall 15 defined by a circular portion 16 from which there extend, radially and in the same plane, three substantially trapezoidal extensions 17 whose minor bases face the opposite side of the portion 16. Alternatively, as-shown in Figures 10 to 13, the flat bottom wall 15 is defined by a substantially rectangular portion 16 which comprises the annular protrusions 4. The portion 16 houses the outlet openings 11, as illustrated in Figure 10. In the embodiment of Figure 12, the outlet openings 11 are made in a side wall 15a of the half-shell 12; the side wall 15a is positioned at an angle to the portion 16 and connected to the latter.

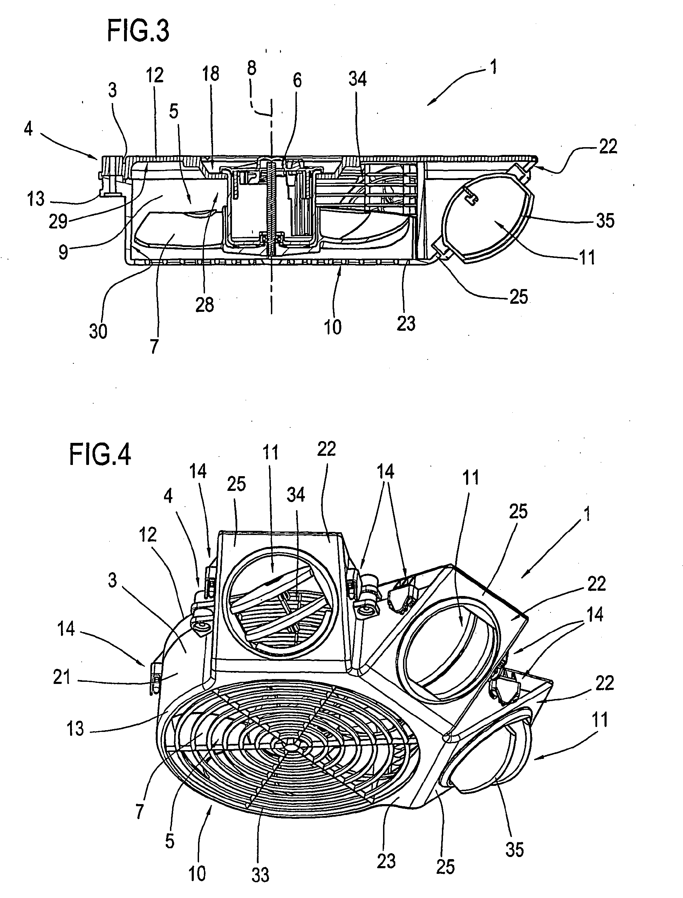

In the middle of the portion 16 there is a perforated seat 18 in which the motor 6 of the fan 5 is mounted (Figure 3). Thus, as shown in Figures 6, 11 and 13, the power supply terminals 19 of the motor 6 can be accessed from the outside of the housing 3 so as to facilitate installation of the device 1.

When the motor 6 is attached to the portion 16 by screws or similar fastening means (not illustrated), the axis 8 of the impeller 7 is perpendicular to the portion 16 and centred with respect to the portion 16 itself.

The extensions 17 are spaced at equal angular intervals to describe a circular arc lying in the same plane as the wall 15, said arc subtending an angle at the centre of approximately 120°.

In a preferred embodiment, the three extensions 17 may be spaced at angular intervals of 60°.

In the preferred embodiment illustrated in Figure 6, the half-shell 12 also has a protruding edge 20 extending around the periphery of the wall 15 except at the radial ends (minor bases) of the extensions 17.

The half-shell 13 is defined by a casing 21 which, in the preferred embodiment, is bell-shaped and substantially cylindrical, with a break on its side wall 26 from which there extend three prismatic extensions 22 with a substantially trapezoidal bases. Alternatively (see Figures 10 and 12) the casing 21 is prismatic in shape.

The casing 21 comprises a flat bottom wall 23 having a central through hole that constitutes the aforementioned air inlet opening 10.

Once the device 1 has been assembled, that is to say, when the two half-shells 12 and 13 are joined to each other, with the fan 5 positioned and fixed inside the housing 3, the wall 23 is positioned in such a way that it faces and is parallel to the wall 15, that is, at right angles to- the axis of rotation 8 of the impeller 7. On closing the two parts of the device together, the extensions 22 of the preferred embodiment engage with the extensions 17 and the side wall 26 of the casing 21 is coupled with the circular portion 16 of the wall 15. More specifically, the half-shell 13 has, on the opposite side of the wall 23, a shaped edge 24 which, when the half-shells 12 and 13 are joined to each other, engages the edge 20 and the radial ends (minor bases) of the extensions 17 to provide an airtight seal.

The extensions 22 extend from the wall 23 with respective flat, substantially trapezoidal walls 25 which, inside the half-shell 13, all form the same predetermined obtuse angle with the plane in which the wall 23 lies and, in the middle of them, have respective through holes which define the aforementioned air outlet openings 11.

When the device 1 is assembled, in its preferred embodiment, the three air outlet openings 11 are arranged in a circle which lies in a plane at right angles to the axis of rotation 8 of the impeller 7 and whose centre coincides with the axis 8 itself.

Like the extensions 17 and 22, the air outlet openings 11 may be spaced at equal angular intervals to describe a circular arc corresponding to the transversal extension of the back seat of the vehicle (Figures 7a, 7b, 7c) in which the ventilating device according to the invention is installed.

In particular, each of the outlet openings 11 faces, and can be adjusted so its air jet is directed at, a passenger occupying the back seat of the vehicle.

In a preferred embodiment, the air outlet openings 11 are spaced at equal angular intervals to describe a circular arc subtending an angle at the centre of approximately 120°, that is to say, they are spaced at angular intervals of 60°.

In other embodiments that are not illustrated, the air outlet openings 11 may be spaced at equal angular intervals to describe a circular arc subtending an angle at the centre other than 120° but less than 180°, so that the outlet openings 11 always face the same side of a plane passing through the axis 8.

In the embodiment illustrated in Figure 12, the air outlet openings 11 may be arranged on a single, uninterrupted arc-shaped extension, and not on several individual extensions.

In yet another embodiment that is not illustrated, there may be any number of outlet openings 11 (for example, five or six) arranged around the circumference of the ventilating device (or in a full circle of 360°). In this case, the outlet openings 11 face each of the passengers occupying both the front and back seats of the vehicle.

In all the embodiments illustrated, the half-shells 12 and 13, once joined to each other, define diverting means 27 surrounding the axial outlet of the impeller 7 so as to change the direction of the forced air flow from the impeller 7 by at least 90°.

The diverting means 27 comprise a substantially cylindrical cap 28 in which the impeller 7 is housed.

The cap 28 has a central axis coinciding with the axis of rotation 8 of the impeller 7, a bottom wall 29 defined by the aforementioned portion 16 of the wall 15 and facing the axial outlet of the impeller 7, and a side wall 30 defined by the wall 26, the edge 20 and a circular partition 31 inside the half-shell 13.

In another embodiment not illustrated, there is no edge 20 and the wall 30 is defined only by the half-shell 13.

The partition 31 faces the air outlet openings 11 in their entirety and extends from the wall 26, having the same radius and central axis as the wall 26, but being lower than the latter in the direction of the central axis coinciding with the axis 8, so that it is separated from the wall 15 of the half-shell 12 even in the absence of the edge 20. Thus, when the half-shells 12 and 13 are joined to each other, the partition 31 delimits an elongated opening 32 in the wall 30 facing the air outlet openings 11 as a whole.

In other words, the three air outlet openings 11 describe an arc around the partition 31 and the opening 32 between the two longitudinal ends of the partition 31 and of the opening 32 themselves.

In a direction parallel to the impeller 7 rotation axis 8, the opening 32 increases transversally in size between its aforementioned longitudinal ends in the rotation direction V of the impeller 7.

Correspondingly, in a direction parallel to the impeller 7 rotation axis 8, the partition 31 decreases transversally in size between its aforementioned longitudinal ends in the rotation direction V of the impeller 7.

In other words, from its highest point at the first outlet opening 11 the partition 31 becomes lower in the rotation direction V of the impeller 7 to reach its lowest point at the last outlet opening 11. Its height decreases gradually and the opening 32, viewed in cross section, is trapezoidal in shape so as to balance and uniformly circulate the air flowing out of the outlet openings 11.

Thus, the partition 31 acts as an equaliser and divider of the air flowing towards the outlet openings 11.

In another embodiment, the opening 32, viewed in cross section, is triangular in shape.

The device 1 comprises a circular safety grill 33 placed over the air inlet opening 10; in addition to the grill, there may also be another guard (not illustrated) to prevent small objects and other foreign matter, such as hair, from being sucked in by the fan.

The additional guard may comprise a layer of sponge or felt of the type used to protect the air inlet of a hairdryer.

The guard in the air inlet opening 10, if made of suitable material, may also have a sound deadening function to reduce the noise made by the impeller 7. To enhance the sound deadening function, the air outlet openings 11 may also be provided with soundproofing material. The soundproofing material used in the inlet and outlet openings 10 and 11 must offer low resistance to air flow.

The housing 3 of the device 1 may also be lined with soundproofing material. In this case, the material must have sound absorbing or sound insulating properties, whereas low resistance to air flow is not required.

Sound deadening materials that may be used include open-cell polyester or polyurethane foams. The outside surface may be corrugated to enhance sound absorption properties.

The device 1 also comprises an elongated safety grill 34 at the opening 32 and air outlet openings 11. More specifically, the grill 33 covers the inlet opening 10 in substantially the same plane, whilst the grill 34 is applied to and closes the opening 32 inside the half-shell 13.

Customary baffles 35 are fitted to the outlet openings 11 in substantially the same plane; these are designed not only to divert the air flow but also to reduce it or even shut it off completely, if necessary.

Instead of being attached directly to the cabin roof, the housing 3 may be fitted to the cabin on a prismatic mount 36, as illustrated in Figures 7b and 7c. The prismatic mount 36 can in turn be attached to the cabin roof by means of screws or similar fastening elements which are not illustrated.

In this case, the prismatic mount 36, the annular protrusions 4 and the fastening screws are positioned and adapted to attach the housing 3 directly to the cabin roof in a predetermined position such that the air inlet opening 10 lies in a plane that is inclined downwardly, from the front to the back of the vehicle cabin. This improves the circulation of the conditioned air from the front of the vehicle cabin (Figure 7c).

In all its embodiments, as well as in the variants illustrated in Figures 7b and 7c, the device 1 can be equipped with an air conduit 37 in the form of a tubular extension connected to the air inlet opening 10 and having, in turn, an opening 38 positioned and oriented in such a way as to intercept the air flowing out of a vehicle 2 climate control system 39 in an open area of the vehicle cabin.

In the embodiment illustrated in Figures 8, 9, 11 and 13, the motor 6 of the impeller 7 is fixed to the second half-shell 13 by mounting elements 13a embodied by a spider that supports the seat 18 for the motor 6. In this case, too, the device 1 has a compact structure in the vertical direction since the spider is very low and, besides, does not create resistance to the air flow produced by the fan.

In another embodiment of it (not illustrated), the ventilating device, which may also be made as a retrofit accessory, comprises a self-contained climate control system including one or more heating or cooling means. These heating or cooling means, consisting for example of heat exchangers built into the ventilating device itself, can be used to produce a flow of warm or cool air or a mixture of the two.

In this case, the device according to the invention supplements and assists the main climate control system built into the motor vehicle by recirculating, warming or cooling the air delivered to the cabin by the main climate control system or it may operate fully independently to warm or cool the vehicle cabin even when the main climate control system-is off.

The invention described can be modified and adapted in several ways without thereby departing from the scope of the inventive concept, as defined in the claims herein.

### LIST OF REFERENCE CHARACTERS

- **1**: Ventilating device
- **2**: Automobile
- **3**: Housing
- **4**: Protrusions
- **5**: Fan
- **6**: Motor
- **7**: Impeller
- **8**: Axis of rotation
- **9**: Chamber
- **10**: Air inlet opening
- **11**: Air outlet openings
- **12**: First half-shell
- **13**: Second half-shell
- **13a**: Mounting elements
- **14**: Locking elements
- **15**: Flat wall
- **15a**: Side wall
- **16**: Circular portion
- **17**: Extensions
- **18**: Seat
- **19**: Terminals
- **20**: Edge
- **21**: Casing
- **22**: Extensions
- **23**: Flat wall
- **24**: Edge
- **25**: Flat walls
- **26**: Side wall
- **27**: Diverting means
- **28**: Cap
- **29**: Bottom wall
- **30**: Side wall
- **31**: Partition
- **32,**: Elongated opening
- **33**: Grill
- **34**: Grill
- **35**: Baffles
- **36**: Prismatic mount
- **37**: Conduit
- **38**: Opening
- **39**: Climate control system
- **V**: Direction of rotation

## Claims

1. A motor vehicle **comprising a motor vehicle** ventilating device comprising a housing (3), fastening means (4) for attaching the housing (3) to the roof of the cabin of a motor vehicle (2) and a fan (5) positioned in the housing (3); the housing (3) defining a closed chamber (9) equipped with an air inlet opening (10) and at least one air outlet opening (11) for delivering to the vehicle cabin through the outlet opening (11) the air that is drawn into the housing (3) by the fan (5) through the inlet opening (10); the housing (3) being defined by two half-shells (12, 13) joined to each other in airtight manner, the first half-shell (12) being designed to be attached to the cabin roof; the fan (5) being an axial fan, **characterized in that** the second half-shell (13) has the air inlet opening (10) placed in front of the air flowing out of a vehicle climate control system (39) in an open area of the vehicle cabin and outlet openings (11) made in it placed in front of the back seat of the vehicle (2).

2. The **motor vehicle** according to claim 1, **characterised in that** the air outlet opening (11) is positioned at the side of the impeller (7) in a radial direction of the impeller (7) itself.

3. The **motor vehicle** according to claim 1, **characterised in that** the air outlet opening (11) is positioned at the side of the impeller (7) in a skew direction of the impeller (7) itself.

4. The **motor vehicle** according to claim 1, **characterised in that** the air outlet opening (11) is positioned in the same plane as the impeller (7) in a direction parallel to but offset from the impeller (7) itself.

5. The **motor vehicle** according to claim 1, **characterised in that** the first half-shell (12) has made in it a seat (18) for mounting the motor (6) of the fan (5) impeller (7).

6. The **motor vehicle** according to claim 1, **characterised in that** the second half-shell (13) is equipped with mounting elements (13a) for supporting a seat (18) in which the motor (6) of the fan (5) impeller (7) can be mounted.

7. The **motor vehicle** according to one of the foregoing claims, **characterised in that the motor vehicle ventilating device** comprises diverting means (27) surrounding the axial outlet of the impeller (7) to change the direction of the forced air flow from the impeller (7) by at least 90°.

8. The **motor vehicle** according to one of the foregoing claims, **characterised in that** the housing (3) has a plurality of air outlet openings (11).

9. The **motor vehicle** according to claims 2 and 8, **characterised in that** the air outlet openings (11) are arranged in a circle which lies in a plane at right angles to the axis of rotation (8) of the impeller (7) and whose centre coincides with the axis (8) itself.

10. The **motor vehicle** according to claim 9, **characterised in that** the air outlet openings (11) are uniformly distributed around a circular arc forming a part of said circle.

11. The **motor vehicle** according to claim 10, **characterised in that** said circular arc corresponds to the transversal extension of the front and/or back seats of the vehicle (2) in which the ventilating device (1) is installed.

12. The **motor vehicle** according to claim 10, **characterised in that** said circular arc subtends an angle of less than 180° at the centre.

13. The **motor vehicle** according to claim 12, **characterised in that** said circular arc subtends an angle of 120° at the centre.

14. The **motor vehicle** according to claim 13, **characterised in that the motor vehicle ventilating device** comprises at least three outlet openings (11) spaced at angular intervals of 60°.

15. The **motor vehicle** according to any of the foregoing claims from 7 to 14, **characterised in that** the diverting means (27) comprise a substantially cylindrical cap (28) in which the impeller (7) is housed, the cap (28) having a central axis that coincides with the central axis of rotation (8) of the impeller (7), a bottom wall (29) facing the axial outlet of the impeller (7) and a side wall (30) with an elongated opening (32) facing the air outlet openings (11) in their entirety; the air outlet openings (11) as a whole describing an arc around the opening (32) between two longitudinal ends of the opening (32) itself.

16. The **motor vehicle** according to claim 15, **characterised in that** the bottom wall (29) of the cap (28) is defined by the first half-shell (12) and the side wall (30) of the cap (28) is defined entirely or mainly by the second half-shell (13).

17. The **motor vehicle** according to claim 15 or 16, **characterised in that** the elongated opening (32), in a direction parallel to the impeller (7) rotation axis (8), increases transversally in size between its longitudinal ends in the rotation direction (V) of the impeller (7) itself.

18. The **motor vehicle** according to claim 17, **characterised in that** the elongated opening (32) has a trapezoidal or triangular shape in cross section so as to balance and uniformly circulate the air flowing out of the outlet openings (11).

19. The **motor vehicle** according to any of the foregoing claims, **characterised in that** the **motor vehicle ventilating device** comprises a safety grill (33) placed over the air inlet opening (10).

20. The **motor vehicle** according to any of the foregoing claims, **characterised in that the motor vehicle ventilating device** comprises a safety grill (34) placed over the air outlet opening (11).

21. The motor vehicle according to any of the foregoing claims, **characterised in that** the air inlet opening (10) lies in a plane at right angles to the axis of rotation (8) of the impeller (7).

22. The motor vehicle according to claim 2 or 3, **characterised in that** the air outlet opening (11) lies in a plane that makes a predetermined obtuse angle with the plane in which the air inlet opening (10) lies.

23. The motor vehicle according to claim 22, **characterised in that** the fastening means (4) are positioned and designed to attach the housing (3) to the vehicle cabin roof in a predetermined position such that the air inlet opening (10) lies in a substantially horizontal plane.

24. The motor vehicle according to claim 22, **characterised in that** the fastening means (4) are positioned and designed to attach the housing (3) to the vehicle cabin roof in a predetermined position such that the air inlet opening (10) lies in a plane that is inclined downwardly, from the front to the back of the vehicle cabin.

25. The motor vehicle according to any of the foregoing claims, **characterised in that the motor vehicle ventilating device** comprises an air conduit (37) in the form of a tubular extension connected to the air inlet opening (10) and having, in turn, an opening (38) positioned and oriented in such a way as to intercept the air flowing out of a vehicle climate control system (39) in an open area of the vehicle cabin.

26. The motor vehicle according to any of the foregoing claims, **characterised in that the motor vehicle ventilating device** comprises one or more heating or cooling means consisting, for example, of heat exchangers built into the ventilating device (1) and used to produce a flow of warm or cool air or a mixture of the two.

27. The motor vehicle according to any of the foregoing claims, **characterised in that** the air inlet opening (10) comprises a layer of protective material designed to prevent small objects and other foreign matter, such as hair, from being sucked into it.

28. The motor vehicle according to any of the foregoing claims, **characterised in that** the air inlet opening (10) comprises a layer of sound deadening material having low resistance to air flow.

29. The motor vehicle according to any of the foregoing claims, **characterised in that** the air outlet opening or openings (11) comprise a layer of sound deadening material having low resistance to air flow.

30. The motor vehicle according to any of the foregoing claims, **characterised in that** the housing (3) comprises a layer of sound-deadening material consisting, for example, of open-cell polyester or polyurethane foam.

## Patentansprüche

1. Kraftfahrzeug mit einer Belüftungsvorrichtung für Kraftfahrzeuge, Folgendes beinhaltend: ein Gehäuse (3), Befestigungsmittel (4) zum Anbringen des Gehäuses (3) am Dach des Fahrgastraumes eines Kraftfahrzeuges (2) und einen Lüfter (5), der in dem Gehäuse (3) untergebracht ist; wobei das Gehäuse (3) eine geschlossene Kammer (9) bildet, die mit einer Lufteinlassöffnung (10) und zumindest einer Luftauslassöffnung (11) ausgestattet ist, um über die Auslassöffnung (11) die Luft in den Fahrgastraum des Fahrzeugs auszugeben, die von dem Lüfter (5) über die Einlassöffnung (10) in das Gehäuse (3) eingezogen wird; wobei das Gehäuse (3) durch zwei Halbschalen (12, 13) gebildet wird, die luftdicht miteinander verbunden sind, und von denen die erste Halbschale (12) dafür vorgesehen ist, am Dach des Fahrgastraums angebracht zu werden; wobei der Lüfter (5) ein Axialgebläse ist, **dadurch gekennzeichnet, dass** an der zweiten Halbschale (13) die Lufteinlassöffnung (10) vor der aus einem Klimasteuerungssystem (39) des Fahrzeuges in einen offenen Bereich des Fahrgastraums ausströmenden Luft angeordnet ist und die daran ausgefertigten Auslassöffnungen (11) vor dem Rücksitz des Fahrzeuges (2) angeordnet sind.

2. Kraftfahrzeug nach Anspruch 1, **dadurch gekennzeichnet, dass** die Luftauslassöffnung (11) an der Seite des Laufrades (7) in einer radialen Richtung des Laufrades (7) selbst angeordnet ist.

3. Kraftfahrzeug nach Anspruch 1, **dadurch gekennzeichnet, dass** die Luftauslassöffnung (11) an der Seite des Laufrades (7) in einer schiefen Richtung des Laufrades (7) selbst angeordnet ist.

4. Kraftfahrzeug nach Anspruch 1, **dadurch gekennzeichnet, dass** die Luftauslassöffnung (11) auf derselben Ebene wie das Laufrad (7) in einer parallelen Richtung zum Laufrad (7) aber versetzt davon angeordnet ist.

5. Kraftfahrzeug nach Anspruch 1, **dadurch gekennzeichnet, dass** in der ersten Halbschale (12) eine Aufnahme (18) für den Einbau des Motors (6) des Laufrades (7) des Lüfters (5) ausgefertigt ist.

6. Kraftfahrzeug nach Anspruch 1, **dadurch gekennzeichnet, dass** die zweite Halbschale (13) mit Montageelementen (13a) zum Tragen einer Aufnahme (18) für den Einbau des Motors (6) des Laufrades (7) des Lüfters (5) ausgestattet ist.

7. Kraftfahrzeug nach einem der vorgehenden Ansprüche, **dadurch gekennzeichnet, dass** die Belüftungsvorrichtung für Kraftfahrzeuge Ableitmittel (27) beinhaltet, die den axialen Auslass des Laufrades (7) umgeben, um die Richtung des aus dem Laufrad (7) austretenden Zwangsluftstromes um mindestens 90° zu ändern.

8. Kraftfahrzeug nach einem der vorgehenden Ansprüche, **dadurch gekennzeichnet, dass** das Gehäuse (3) mehrere Luftauslassöffnungen (11) aufweist.

9. Kraftfahrzeug nach den Ansprüchen 2 und 8, **dadurch gekennzeichnet, dass** die Luftauslassöffnungen (11) in einem Kreis angeordnet sind, der auf einer Ebene im rechten Winkel zu der Drehachse (8) des Laufrades (7) liegt und dessen Mittelpunkt mit der Achse (8) selbst übereinstimmt.

10. Kraftfahrzeug nach Anspruch 9, **dadurch gekennzeichnet, dass** die Luftauslassöffnungen (11) gleichmäßig auf einem Kreisbogen verteilt sind, der einen Teil des genannten Kreises bildet.

11. Kraftfahrzeug nach Anspruch 10, **dadurch gekennzeichnet, dass** der genannte Kreisbogen der transversalen Ausdehnung der vorderen und/oder hinteren Sitze des Fahrzeuges (2) entspricht, in dem die Belüftungsvorrichtung (1) installiert ist.

12. Kraftfahrzeug nach Anspruch 10, **dadurch gekennzeichnet, dass** der genannte Kreisbogen einen Winkel von weniger als 180° in der Mitte beschreibt.

13. Kraftfahrzeug nach Anspruch 12, **dadurch gekennzeichnet, dass** der genannte Kreisbogen einen Winkel von 120° in der Mitte beschreibt.

14. Kraftfahrzeug nach Anspruch 13, **dadurch gekennzeichnet, dass** die Belüftungsvorrichtung für Kraftfahrzeuge zumindest drei Auslassöffnungen (11) beinhaltet, die in Winkelabständen von 60° voneinander angeordnet sind.

15. Kraftfahrzeug nach einem der vorgehenden Ansprüche von 7 bis 14, **dadurch gekennzeichnet, dass** die Ableitmittel (27) eine im Wesentlichen zylindrische Haube (28) beinhalten, in der das Laufrad (7) untergebracht ist, wobei die Haube (28) eine Mittelachse, die mit der mittleren Drehachse (8) des Laufrades (7) übereinstimmt, eine Bodenwand (29), die dem axialen Auslass des Laufrades (7) zugewandt ist, und eine Seitenwand (30) mit einer länglichen Öffnung (32), die der Gesamtheit der Luftauslassöffnungen (11) zugewandt ist, aufweist; wobei die Luftauslassöffnungen (11) insgesamt einen Bogen um die Öffnung (32) zwischen zwei Längsenden der Öffnung (32) selbst beschreiben.

16. Kraftfahrzeug nach Anspruch 15, **dadurch gekennzeichnet, dass** die Bodenwand (29) der Haube (28) durch die erste Halbschale (12) gebildet wird und die Seitenwand (30) der Haube (28) vollständig oder vorwiegend durch die zweite Halbschale (13) gebildet wird.

17. Kraftfahrzeug nach Anspruch 15 oder 16, **dadurch gekennzeichnet, dass** die längliche Öffnung (32) transversal, in einer parallel zu der Drehachse (8) des Laufrades (7) verlaufenden Richtung, zwischen ihren Längsenden in der Drehrichtung (V) des Laufrades (7) an Größe zunimmt.

18. Kraftfahrzeug nach Anspruch 17, **dadurch gekennzeichnet, dass** die längliche Öffnung (32) eine trapezförmige oder dreieckige Form im Querschnitt aufweist, um die aus den Auslassöffnungen (11) ausströmende Luft auszugleichen und gleichmäßig zirkulieren zu lassen.

19. Kraftfahrzeug nach einem der vorgehenden Ansprüche, **dadurch gekennzeichnet, dass** die Belüftungsvorrichtung für Kraftfahrzeuge ein Schutzgitter (33) beinhaltet, das über der Lufteinlassöffnung (10) angebracht ist.

20. Kraftfahrzeug nach einem der vorgehenden Ansprüche, **dadurch gekennzeichnet, dass** die Belüftungsvorrichtung für Kraftfahrzeuge ein Schutzgitter (34) beinhaltet, das über der Luftauslassöffnung (11) angebracht ist.

21. Kraftfahrzeug nach einem der vorgehenden Ansprüche, **dadurch gekennzeichnet, dass** die Lufteinlassöffnung (10) auf einer Ebene im rechten Winkel zu der Drehachse (8) des Laufrades (7) liegt.

22. Kraftfahrzeug nach Anspruch 2 oder 3, **dadurch gekennzeichnet, dass** die Luftauslassöffnung (11) auf einer Ebene liegt, die einen vorgegebenen stumpfen Winkel mit der Ebene bildet, auf der die Lufteinlassöffnung (10) liegt.

23. Kraftfahrzeug nach Anspruch 22, **dadurch gekennzeichnet, dass** die Befestigungsmittel (4) so angeordnet und ausgeführt sind, dass sie das Gehäuse (3) am Dach der Fahrgastkabine des Fahrzeuges in einer vorgegebenen Position derart befestigen, dass die Lufteinlassöffnung (10) in einer im Wesentlichen horizontalen Ebene liegt.

24. Kraftfahrzeug nach Anspruch 22, **dadurch gekennzeichnet, dass** die Befestigungsmittel (4) so angeordnet und ausgeführt sind, dass sie das Gehäuse (3) am Dach der Fahrgastkabine des Fahrzeuges in einer vorgegebenen Position derart befestigen, dass die Lufteinlassöffnung (10) in einer Ebene liegt, die von der Vorderseite zur Rückseite der Fahrgastkabine hin nach unten geneigt ist.

25. Kraftfahrzeug nach einem der vorgehenden Ansprüche, **dadurch gekennzeichnet, dass** die Belüftungsvorrichtung für Kraftfahrzeuge eine Luftleitung (37) aufweist, die in Form einer röhrenförmigen Verlängerung ausgebildet ist, die mit der Lufteinlassöffnung (10) verbunden ist und ihrerseits eine Öffnung (38) aufweist, die derart angeordnet und ausgerichtet ist, dass sie die Luft abfängt, die aus einem Klimasteuerungssystem (39) des Fahrzeuges in einen offenen Bereich des Fahrgastraums ausströmt.

26. Kraftfahrzeug nach einem der vorgehenden Ansprüche, **dadurch gekennzeichnet, dass** die Belüftungsvorrichtung für Kraftfahrzeuge eine oder mehrere Heiz- oder Kühleinrichtungen beinhaltet, die beispielsweise aus Wärmetauschern bestehen, die in die Belüftungsvorrichtung (1) eingebaut sind und dazu dienen, eine Strömung warmer oder kalter Luft oder eine Mischung aus den beiden zu erzeugen.

27. Kraftfahrzeug nach einem der vorgehenden Ansprüche, **dadurch gekennzeichnet, dass** die Lufteinlassöffnung (10) eine Schicht aus Schutzmaterial beinhaltet, die dafür ausgelegt ist, das Einsaugen von kleinen Gegenständen und anderen Fremdkörpern, wie beispielsweise Haaren, zu verhindern.

28. Kraftfahrzeug nach einem der vorgehenden Ansprüche; **dadurch gekennzeichnet, dass** die Lufteinlassöffnung (10) eine Schicht aus schalldämmendem Material beinhaltet, das einen geringen Widerstand für die Luftströmung aufweist.

29. Kraftfahrzeug nach einem der vorgehenden Ansprüche, **dadurch gekennzeichnet, dass** die Luftauslassöffnung oder -öffnungen (11) eine Schicht aus schalldämmendem Material beinhalten, das einen geringen Widerstand für die Luftströmung aufweist.

30. Kraftfahrzeug nach einem der vorgehenden Ansprüche, **dadurch gekennzeichnet, dass** das Gehäuse (3) eine Schicht aus schalldämmendem Material beinhaltet, das beispielsweise aus offenzelligem Polyester- oder Polyurethan-Schaumstoff besteht.

## Revendications

1. Un véhicule automobile comprenant un dispositif de ventilation pour véhicules automobiles comprenant une carcasse (3), des moyens de fixation (4) pour fixer la carcasse (3) au toit de l'habitacle d'un véhicule automobile (2) et un ventilateur (5) logé dans la carcasse (3) ; la carcasse (3) définissant une chambre fermée (9) dotée d'une ouverture d'entrée d'air (10) et d'au moins une ouverture de sortie d'air (11) pour véhiculer dans l'habitacle du véhicule, à travers ladite ouverture de sortie (11), l'air que le ventilateur (5) appelle dans la carcasse (3) à travers ladite ouverture d'entrée (10) ; la carcasse (3) étant définie par deux demi-coques (12, 13) réciproquement accouplées de façon étanche à l'air, la première demi-coque (12) étant destinée à être fixée au toit de l'habitacle ; le ventilateur (5) étant un ventilateur axial, **caractérisé en ce que** la deuxième demi-coque (13) présente l'ouverture d'entrée d'air (10) située face à la sortie d'air d'un système de climatisation (39) du véhicule, dans une zone ouverte de l'habitacle du véhicule, ainsi que des ouvertures de sortie (11) situées face au siège arrière du véhicule (2).

2. Le véhicule automobile selon la revendication 1, **caractérisé en ce que** l'ouverture de sortie d'air (11) est située latéralement à l'hélice (7), le long d'une direction radiale de cette même hélice (7).

3. Le véhicule automobile selon la revendication 1, **caractérisé en ce que** l'ouverture de sortie d'air (11) est située latéralement à l'hélice (7), le long d'une direction oblique de cette même hélice (7).

4. Le véhicule automobile selon la revendication 1, **caractérisé en ce que** l'ouverture de sortie d'air (11) est située dans le même plan que l'hélice (7), dans une direction parallèle à mais décalée par rapport à cette même hélice (7).

5. Le véhicule automobile selon la revendication 1, **caractérisé en ce que** la première demi-coque (12) présente un logement (18) pour le montage du moteur (6) de l'hélice (7) du ventilateur (5).

6. Le véhicule automobile selon la revendication 1, **caractérisé en ce que** la deuxième demi-coque (13) est dotée d'éléments de support (13a) destinés à supporter un logement (18) dans lequel le moteur (6) de l'hélice (7) du ventilateur (5) peut être monté.

7. Le véhicule automobile selon une des revendications précédentes, **caractérisé en ce que** le dispositif de ventilation pour véhicules automobiles comprend des moyens déflecteurs (27) entourant la sortie axiale de l'hélice (7) pour dévier d'au moins 90° la direction du flux d'air forcé par rapport à l'hélice (7) elle-même.

8. Le véhicule automobile selon une des revendications précédentes, **caractérisé en ce que** la carcasse (3) présente une pluralité d'ouvertures de sortie d'air (11).

9. Le véhicule automobile selon les revendications 2 et 8, **caractérisé en ce que** les ouvertures de sortie d'air (11) sont disposées le long d'une circonférence qui repose sur un plan orthogonal à l'axe (8) de rotation de l'hélice (7) et dont le centre coïncide avec l'axe (8) lui-même.

10. Le véhicule automobile selon la revendication 9, **caractérisé en ce que** les ouvertures de sortie d'air (11) sont uniformément réparties le long d'un arc de cercle de ladite circonférence.

11. Le véhicule automobile selon la revendication 10, **caractérisé en ce que** ledit arc de cercle correspond à l'extension transversale des sièges avant et/ou arrière du véhicule (2) dans lequel le dispositif de ventilation (1) est monté.

12. Le véhicule automobile selon la revendication 10, **caractérisé en ce que** ledit arc de cercle sous-tend un angle, au centre, inférieur à 180°.

13. Le véhicule automobile selon la revendication 12, **caractérisé en ce que** ledit arc de cercle sous-tend un angle, au centre, de 120°.

14. Le véhicule automobile selon la revendication 13, **caractérisé en ce que** le dispositif de ventilation pour véhicules automobiles comprend au moins trois ouvertures de sortie (11), espacées entre elles selon des intervalles angulaires de 60°.

15. Le véhicule automobile selon l'une quelconque des revendications précédentes de 7 à 14, **caractérisé en ce que** les moyens déflecteurs (27) comprennent une calotte (28) essentiellement cylindrique dans laquelle est logée l'hélice (7), ladite calotte (28) présentant un axe central qui coïncide avec l'axe central (8) de rotation de l'hélice (7), une paroi de fond (29) disposée face à la sortie axiale de l'hélice (7) et une paroi latérale (30) dotée d'une ouverture allongée (32) faisant face à l'ensemble des ouvertures de sortie d'air (11) ; ledit ensemble d'ouvertures de sortie d'air (11) décrivant un arc autour de ladite ouverture (32) entre deux extrémités longitudinales de l'ouverture (32) elle-même.

16. Le véhicule automobile selon la revendication 15, **caractérisé en ce que** la paroi de fond (29) de la calotte (28) est définie par la première demi-coque (12) et **en ce que** la paroi latérale (30) de la calotte (28) est définie, entièrement ou principalement, par la deuxième demi-coque (13).

17. Le véhicule automobile selon la revendication 15 ou 16, **caractérisé en ce que** l'ouverture allongée (32) présente, dans une direction parallèle à l'axe (8) de rotation de l'hélice (7), une dimension transversalement croissante entre ses extrémités longitudinales selon le sens (V) de rotation de l'hélice (7) elle-même.

18. Le véhicule automobile selon la revendication 17, **caractérisé en ce que** l'ouverture allongée (32) présente, en coupe, une forme trapézoïdale ou triangulaire pour équilibrer et véhiculer uniformément le débit d'air sortant des ouvertures de sortie (11).

19. Le véhicule automobile selon l'une quelconque des revendications précédentes, **caractérisé en ce que** le dispositif de ventilation pour véhicules automobiles comprend une grille de sécurité (33) placée sur l'ouverture d'entrée d'air (10).

20. Le véhicule automobile selon l'une quelconque des revendications précédentes, **caractérisé en ce que** le dispositif de ventilation pour véhicules automobiles comprend une grille de sécurité (34) placée sur l'ouverture de sortie d'air (11).

21. Le véhicule automobile selon l'une quelconque des revendications précédentes, **caractérisé en ce que** l'ouverture d'entrée d'air (10) repose sur un plan orthogonal à l'axe (8) de rotation de l'hélice (7).

22. Le véhicule automobile selon la revendication 2 ou 3, **caractérisé en ce que** l'ouverture de sortie d'air (11) repose sur un plan qui forme un angle obtus prédéfini avec le plan d'appartenance de l'ouverture d'entrée d'air (10).

23. Le véhicule automobile selon la revendication 22, **caractérisé en ce que** les moyens de fixation (4) sont positionnés et conçus pour fixer la carcasse (3) au toit de l'habitacle du véhicule dans une position prédéfinie et telle que l'ouverture d'entrée d'air (10) repose sur un plan essentiellement horizontal.

24. Le véhicule automobile selon la revendication 22, **caractérisé en ce que** les moyens de fixation (4) sont positionnés et conçus pour fixer la carcasse (3) au toit de l'habitacle du véhicule dans une position prédéfinie et telle que l'ouverture d'entrée d'air (10) repose sur un plan qui est incliné vers le bas, de la zone avant vers la zone arrière de l'habitacle du véhicule.

25. Le véhicule automobile selon l'une quelconque des revendications précédentes, **caractérisé en ce que** le dispositif de ventilation pour véhicules automobiles comprend un conduit d'air (37), réalisé sous la forme d'un prolongement tubulaire, qui est raccordé à l'ouverture d'entrée d'air (10) et présente, à son tour, une ouverture (38) disposée et orientée pour intercepter l'air sortant d'un système de climatisation (39) du véhicule, dans une zone ouverte de l'habitacle de ce même véhicule.

26. Le véhicule automobile selon l'une quelconque des revendications précédentes, **caractérisé en ce que** le dispositif de ventilation pour véhicules automobiles comprend un ou plusieurs moyens de chauffage ou de refroidissement consistant, par exemple, en des échangeurs thermiques incorporés dans le dispositif de ventilation (1) et servant à créer un flux d'air chaud ou froid et/ou un mélange de ces deux flux.

27. Le véhicule automobile selon l'une quelconque des revendications précédentes, **caractérisé en ce que** l'ouverture d'entrée d'air (10) comprend une couche de matériau de protection destinée à empêcher l'aspiration de petits objets et autres corps étrangers tels que des cheveux.

28. Le véhicule automobile selon l'une quelconque des revendications précédentes, **caractérisé en ce que** l'ouverture d'entrée d'air (10) comprend une couche de matériau insonorisant ayant des caractéristiques de basse résistance au passage de l'air.

29. Le véhicule automobile selon l'une quelconque des revendications précédentes, **caractérisé en ce que** la ou les ouvertures de sortie d'air (11) comprennent une couche de matériau insonorisant ayant des caractéristiques de basse résistance au passage de l'air.

30. Le véhicule automobile selon l'une quelconque des revendications précédentes, **caractérisé en ce que** la carcasse (3) comprend une couche de matériau insonorisant, par exemple, une mousse de polyester ou de polyuréthanne à cellules ouvertes.
